# EUROPÄISCHE PATENTANMELDUNG

(11) **EP 4 042 876 A1**
(43) Veröffentlichungstag der Anmeldung: **17.08.2022**
(21) Anmeldenummer: 22153214.6
(22) Anmeldetag: 25.01.2022
(51) Int. Cl.: A23L 13/00, A23J 3/22, A23L 13/40, A23L 13/50, A23L 13/60

(54) **VORGEFORMTES BRATGUT MIT EINER BRATMASSE**

(30) Priorität: 28.01.2021 AT 500502021
(71) Anmelder: Österreichische Rinderbörse GmbH, 4020 Linz (AT)
(72) Erfinder: Lehenbauer, Mario, 4300 St. Valentin (AT)
(74) Vertreter: Hübscher & Partner Patentanwälte GmbH

(57) **Zusammenfassung**

Es wird ein vorgeformtes Bratgut (1) mit einer Bratmasse (2), die eine eine Ausnehmung (3) begrenzende Bratfläche (5a) aufweist, wobei die Ausnehmung (3) eine Vertiefung in der Bratmasse (2) ausbildet, beschrieben. Damit das vorgeformte Bratgut (1) sowohl unabhängig vom Koch hinsichtlich des Geschmackserlebnissen reproduzierbar zubereitet, als auch die Hygienebedingungen und Gesundheitsaspekte bei der Zubereitung verbessert werden kann, wird vorgeschlagen, dass in der Ausnehmung (3) eine wenigstens zur Ebene der Bratfläche (5a) ragende, scheibenförmige Fettmasse (4) angeordnet ist.

## Beschreibung

Die Erfindung bezieht sich auf ein vorgeformtes Bratgut mit einer Bratmasse, die eine eine Ausnehmung begrenzende Bratfläche aufweist, wobei die Ausnehmung eine Vertiefung in der Bratmasse ausbildet.

Vorgeformtes Bratgut, wie Burger-Pattys bzw. vegetarische oder vegane Bratlinge, ist hinlänglich aus dem Stand der Technik bekannt. Üblicherweise wird eine Bratmasse, beispielsweise Hackfleisch, zerkleinertes Gemüse, zerkleinerter Tofu, oder Soja etc. gegebenenfalls mit einem Bindemittel versetzt, vorgeformt und anschließend gebraten. Die Form, insbesondere die Dicke, bestimmt dabei die benötigte Bratzeit des Bratguts. Im Fastfood-Bereich ist es daher üblich, bereits industriell vorgeformtes und daher uniformes Bratgut zu verwenden, um unabhängig vom Koch reproduzierbare Bedingungen hinsichtlich der Brat- bzw. Garzeit des Bratguts sicherzustellen.

Um die Bratzeit eines vorgeformten Bratguts zu verkürzen, ist es aus der GB2355173B bekannt, in der Bratmasse eine Ausnehmung vorzusehen, welche eine Bratfläche der Bratmasse begrenzt. Nachteilig ist daran allerdings, dass ein reproduzierbares Bratverhalten und damit resultierendes Geschmackserlebnis nicht nur von der Bratzeit, sondern auch von anderen Faktoren, wie der Temperatur der Gar- bzw. Grillfläche, der Menge, der Qualität und der Art des eingesetzten Bratfettes, sowie von den Hygienemaßnahmen während des Zubereitens des Bratguts abhängt. So variiert das Bratverhalten und die für das Geschmackserlebnis relevante Maillardreaktion je nach Wärmeeintrag in das Bratgut, der wesentlich vom verwendeten Bratfett und der Bratfettmenge abhängt. Darüber hinaus können bei unregelmäßiger Reinigung der Pfanne Bratmassen- oder Fettrückstände des vorhergehend gebratenen Bratguts das darauffolgende zu bratende Bratgut in negativer Weise beeinflussen, was nicht nur unhygienisch, sondern auch gesundheitsschädlich ist.

Aus DE202018105430U1 ist ein vorgeformtes Bratgut mit einer Bratmasse bekannt. Die Bratmasse weist eine als Durchgangsöffnung ausgebildete Ausnehmung auf, in der ein Speisefett angeordnet ist. US2011111104A1 offenbart ein Bratgut, dessen Bratmasse mit unterschiedlichen Zutaten gefüllt ist. Die US4106162A und BE1009219A6 offenbaren jeweils ein Bratgut mit einer Bratmasse, in die Ausnehmungen unterschiedlicher Ausgestaltung eingeformt sind. Das Bratverhalten und das Geschmackserlebnis hängt auch bei den vorgenannten Bratgütern wesentlich von der Temperatur der Gar- bzw. Grillfläche, der Menge, der Qualität und der Art des eingesetzten Bratfettes, sowie von den Hygienemaßnahmen während des Zubereitens ab.

Der Erfindung liegt somit die Aufgabe zugrunde, ein vorgeformtes Bratgut vorzuschlagen, das sowohl unabhängig vom Koch hinsichtlich des Geschmackserlebnissen reproduzierbar zubereitet werden kann, als auch die Hygienebedingungen und Gesundheitsaspekte bei der Zubereitung verbessert.

Die Erfindung löst die gestellte Aufgabe dadurch, dass in der Ausnehmung eine wenigstens zur Ebene der Bratfläche ragende, scheibenförmige Fettmasse angeordnet ist. Als Bratfläche wird im Sinne der Erfindung jene Oberfläche der Bratmasse verstanden, die in unmittelbaren Kontakt mit der Garfläche steht, bei der es sich beispielsweise um eine Grillfläche oder einen Pfannenboden handeln kann. Zufolge der erfindungsgemäßen Maßnahme beginnt zumindest bei Kontakt der Bratfläche der üblicherweise scheibenförmigen Bratmasse mit der Garfläche die Fettmasse aufzuschmelzen, wodurch eine vorgebbare Fettmenge beim Anbraten der Bratmasse zur Verfügung steht, die sich nach dem Aufschmelzen zwischen der Garfläche und der Bratmasse verteilt. Das Verhältnis von Fettmasse zu Bratmasse im Bratgut kann produktionsseitig in Abhängigkeit der Art und Form des Bratguts vorbestimmt werden, sodass unabhängig vom Koch optimale und reproduzierbare Bratbedingungen und somit Geschmacksbedingungen geschaffen werden. Da also das Bratfett nicht vom Koch hinzugegeben wird, kann dadurch auch das Wiederverwenden von Altfett verhindert werden, was das Geschmackserlebnis und die Hygienebedingungen weiter verbessert. Außerdem wird dadurch eine unnötig hohe Zugabe von Bratfett durch den Koch verhindert, was den Fettgehalt des zubereiteten Bratguts reduziert. Da die Fettmasse üblicherweise einen niedrigen Schmelzpunkt, beispielsweise von 50 - 72 °C, aufweist, kann sich die Fettmasse gleichmäßig zwischen Bratfläche der Bratmasse und Garfläche ausbreiten, bevor die Bratmasse an der Garfläche ankrustet. Grundsätzlich kann die Ausnehmung in der Bratmasse für die Fettmasse einen Durchbruch ausformen. Bevorzugte Bratbedingungen ergeben sich jedoch, wenn die Ausnehmung eine Vertiefung in der Bratmasse ausbildet. In einer weiteren Ausführungsform können auf beiden Bratflächen der Bratmasse Vertiefungen als Ausnehmungen vorgesehen sein, in denen je eine Fettmasse angeordnet ist. Zum Zubereiten des vorgeformten Bratguts kann dieses mit der Fettmasse in Richtung der Garfläche einer Pfanne zeigend in die Pfanne gegeben werden und nach dem Aufschmelzen der Fettmasse und dem Durchgaren der ersten Seite des vorgeformten Bratguts gewendet werden, woraufhin die zweite Seite gebraten wird. Als Bratmasse eignet sich Hackfleisch, gehacktes Gemüse, Tofu, Soja, Tempeh oder sonstige aus dem Stand der Technik bekannte formbare Lebensmittel. Die Bratmasse kann gegebenenfalls mit Bindemittel versetzt sein. Als Fettmasse eignen sich unterschiedliche tierische oder pflanzliche Fette, wie Schmalz, Kokosfett etc.

Um bei vorgeformten Bratgut mit besonders großen Durchmessern ein ausreichendes Verteilen der Fettmasse zwischen Bratfläche der Bratmasse und Garfläche zu ermöglichen, wird vorgeschlagen, dass die Fettmasse die Ebene der Bratfläche überragt. Durch den so erzeugten Überstand der Fettmasse wird beim Anbraten des Bratguts sichergestellt, dass zuerst ein ausreichend großer Anteil der Fettmasse abschmilzt und sich zwischen der Bratfläche der Bratmasse und der Garfläche verteilt, bevor die Bratmasse in Kontakt mit der Garfläche kommt und im Bereich um die Ausnehmung ankrustet.

Damit auch vorgeformtes Bratgut mit einem hohen Wassergehalt während des Anbratens seine gewünschte Form beibehält und somit ein Zusammenziehen des Bratguts weitgehend verhindert wird, kann die Bodenfläche der Ausnehmung das 0,15 - 4-fache, insbesondere das 0,3 bis 1-fache der Bratfläche betragen. Dies bedeutet, dass wenigstens ein Teil der Bratfläche nicht von der in der Ausnehmung angeordneten und beim Anbraten abschmelzenden Fettmasse erfasst wird, wodurch an diesen Stellen ein beabsichtigtes Ankrusten der Bratmasse erfolgt, die für die Beibehaltung der Form des Bratguts beim Braten sorgen. Es empfiehlt sich dabei, dass die Ausnehmung gleichmäßig von der Bratfläche umschlossen ist, sodass die Bratfläche die Ausnehmung vorzugsweise in einem Ring mit gleichbleibender Breite umgibt. Das Bratgut kann insbesondere einen Durchmesser von 60 bis 100 mm aufweisen. Die Bodenfläche der Ausnehmung kann insbesondere einen Durchmesser von 30 bis 50 mm aufweisen. Besonders einfache Bratbedingungen ergeben sich, wenn der Durchmesser der Fettmasse 40 bis 60% des Durchmessers der Bratmasse entspricht.

Besonders günstige Produktionsbedingungen des Bratguts ergeben sich, wenn die Fettmasse die Ausnehmung vollständig ausfüllt. So kann die Fettmasse beispielsweise als zähflüssige Masse in die Ausnehmung gefüllt werden, wonach sie dort aushärtet. Eine weitere Möglichkeit liegt darin, die Fettmasse in hartem Zustand in die Bratmasse einzudrücken.

Bei scheibenförmigem Bratgut mit im Lebensmittelbereich gängigen Dimensionen ergeben sich besonders günstige Bedingungen hinsichtlich eines reproduzierbaren Geschmackserlebnisses, wenn die Fettmasse scheibenförmig mit einer Dicke von 2 - 5 mm ausgebildet ist. Bei diesen Dicken ist einerseits ein vollständiges Abschmelzen der Fettmasse beim Anbraten und dennoch aufgrund der ausreichend hohen Eigenstabilität eine einfache Verarbeitung der Fettmasse beim Produzieren des Bratguts möglich.

Grundsätzlich können je nach Art der Bratmasse (Fleisch, Gemüse, Tofu, Soja etc.) das Verhältnis von Fett- zu Bratmasse variieren, jedoch haben Versuche ergeben, dass ein besonders bekömmliches, wie auch reproduzierbares Geschmackserlebnis erzielt wird, wenn das Volumen der Fettmasse 1,5 - 20 %, insbesondere 2 - 8 %, des Volumens des Bratguts beträgt. Das Bratgut setzt sich aus Bratmasse und Fettmasse zusammen. Bei diesem Verhältnis wird ausreichend Fettmasse zum Anbraten beider Seiten des Bratguts zur Verfügung gestellt, dennoch kann ein beabsichtigtes Ankrusten bestimmter Stellen der Bratfläche an der Garfläche zur Formbeibehaltung erzielt werden. Es hat sich als besonders vorteilhaft herausgestellt, wenn die Dicke der Fettmasse 5 bis 15% der größten Dicke der Bratmasse entspricht. Insbesondere kann die Dicke der Fettmasse 10% der größten Dicke der Bratmasse entsprechen.

Wird als Bratmasse Fleisch verwendet, so empfiehlt es sich für ein besonders abgestimmtes Geschmackserlebnis, dass die Bratmasse Fleisch einer Tiergattung, insbesondere einer Klassifizierungskategorie einer Tiergattung, aufweist, von der auch das Fett der Fettmasse stammt. Mit Tiergattung ist die Gattung des Tieres, wie beispielsweise Schwein, Rind, Pute, Huhn etc. gemeint. Unter Klassifizierungskategorie kann eine Unterkategorie der Tiergattung verstanden werden. Im Falle des Rindes als Tiergattung ergeben sich somit Klassifizierungskategorien wie Jungstier, Stier, Ochse, Kuh, Kalbin.

Um das Bratgut weiter geschmacklich zu verfeinern, wird vorgeschlagen, dass die Fettmasse Gewürze und/oder Aromastoffe aufweist.

In der Zeichnung ist der Erfindungsgegenstand beispielsweise dargestellt. Es zeigen
- Fig. 1: eine Draufsicht des vorgeformten Bratguts,
- Fig. 2: einen Schnitt entlang der Linie II-II einer ersten Ausführungsform des vorgeformten Bratguts und
- Fig. 3: einen Schnitt entlang der Linie II-II einer zweiten Ausführungsform des vorgeformten Bratguts.

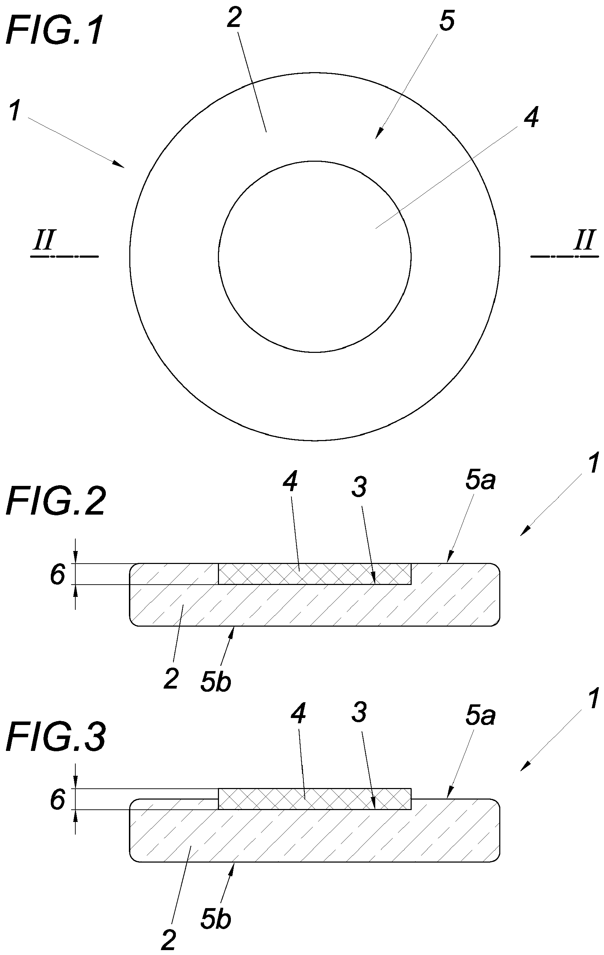

Ein erfindungsgemäßes vorgeformtes Bratgut 1 weist, wie beispielsweise der Fig. 1 zu entnehmen ist, eine Bratmasse 2 und eine in einer Ausnehmung 3 angeordnete Fettmasse 4 auf. Da die Fettmasse 4 erfindungsgemäß, wie insbesondere aus den Figs. 2 und 3 ersichtlich ist, wenigstens bis zur Ebene der die Ausnehmung 3 begrenzenden Bratfläche 5a ragt, schmilzt die Fettmasse 4 wenigstens bei Kontakt der Bratfläche 5a mit einer nicht dargestellte Garfläche beispielsweise einer Pfanne oder dergleichen auf und wirkt somit als Bratfett, das sich zwischen Bratfläche 5a und Garfläche gleichmäßig ausbreitet. Nach dem Durchgaren der ersten Seite des Bratguts 1 kann dieses gewendet werden, sodass die Bratfläche 5b auf der Garfläche aufliegt und dadurch auch die zweite Seite des Bratguts 1 durchgaren kann. Die Menge der Fettmasse wird vom vorgeformten Bratgut 1 selbst vorgegeben, wodurch die Art und Menge des Bratfettes produktionsseitig vorbestimmt werden kann und somit ein reproduzierbares Geschmackserlebnis der Bratguts 1 ermöglicht wird. Die hier aufgezeigten Ausführungsformen weisen nur an einer Bratfläche 5a Ausnehmungen 3 auf. Es können jedoch auch an beiden Bratflächen 5a, 5b Ausnehmungen 3 für jeweils eine Fettmasse 4 vorgesehen sein.

Fig. 2 zeigt eine mögliche Ausführungsform des Bratguts 1, bei der die Fettmasse 4 mit einer Bratfläche 5a eine gemeinsame Ebene bildet.

Fig. 3 zeigt eine alternative Ausführungsform des Bratguts 1, bei der die Fettmasse 4 die Ebene der Bratfläche 5a überragt. Dies kann durch Variieren der Tiefe der Ausnehmung 3 oder der Dicke der Fettmasse 4 bewerkstelligt werden. Die in Fig. 3 gezeigte Ausführungsform hat den Vorteil, dass ein ausreichend großer Anteil der Fettmasse 4 beim Anbraten abgeschmolzen und somit zwischen Bratfläche 5a und Garfläche verteilt werden kann, bevor die Bratmasse 2 im Bereich der Ausnehmung 3 an der Garfläche ankrustet.

Die Ausnehmung 3 kann 15 - 80 %, insbesondere 16 - 55 % der größten Querschnittsfläche des Bratguts 1 einnehmen. Dadurch kann ein absichtliches Ankrusten gewisser Stellen der Bratfläche 5a hervorgerufen werden, was eine Beibehaltung der Form des Bratguts 1 während des Bratens begünstigt.

Bei üblicherweise rotationssymmetrischem, scheibenförmigem Bratgut 1 empfiehlt es sich, dass die Ausnehmung 3 gleichmäßig von der Bratfläche 5a umgeben ist, da dadurch ein Bratmassenring an der Garfläche ankrusten kann, was eine besonders effektive Beibehaltung der Form des Bratguts 1 bedingt.

Wie in den Figs. 2 und 3 gezeigt wird, kann die Fettmasse 4 die Ausnehmung 3 vollständig ausfüllen, was eine einfache Herstellung des Bratguts 1 begünstigt.

Bevorzugt kann die Fettmasse 4 scheibenförmig ausgebildet sein (Figs 2 und 3). Dabei haben sich Scheiben mit einer Dicke von 2 - 5 mm als besonders geeignet herausgestellt, da diese bei üblichen Bratbedingungen vollständig abschmelzen und dennoch ausreichend Eigenstabilität aufweisen, um auf einfache Art und Weise bei der Herstellung des Bratguts 1 verarbeitet werden zu können.

Das Volumen der Fettmasse 4 kann 1,5 - 20 %, insbesondere 2 - 8 %, des Volumens des Bratguts 1 betragen.

Als Bratmasse 2 kann Fleisch einer Tiergattung, insbesondere einer Klassifizierungskategorie einer Tiergattung, verwendet werden, von der auch das Fett der Fettmasse 4 stammt.

Die Fettmasse 4 kann mit Gewürzen und/oder mit Aromastoffen versetzt sein.

Ein vorgeformtes Bratgut 1 kann eine scheibenförmige, kreisförmige Bratmasse 2 mit einem Durchmesser von 80 mm aufweisen. Die größte Dicke der Bratmasse 2 kann 35 mm betragen. Die Fettmasse 4 kann scheibenförmig und kreisförmig sein und einen Durchmesser von 40 mm aufweisen. Die größte Dicke der Fettmasse 4 kann 3,5 mm betragen.

## Patentansprüche

1. Vorgeformtes Bratgut (1) mit einer Bratmasse (2), die eine eine Ausnehmung (3) begrenzende Bratfläche (5a) aufweist, wobei die Ausnehmung (3) eine Vertiefung in der Bratmasse (2) ausbildet, **dadurch gekennzeichnet, dass** in der Ausnehmung (3) eine wenigstens zur Ebene der Bratfläche (5a) ragende, scheibenförmige Fettmasse (4) angeordnet ist.

2. Vorgeformtes Bratgut (1) nach Anspruch 1, **dadurch gekennzeichnet, dass** die Fettmasse (4) die Ebene der Bratfläche (5a) überragt.

3. Vorgeformtes Bratgut (1) nach Anspruch 1 oder 2, **dadurch gekennzeichnet, dass** die Bodenfläche der Ausnehmung (3) das 0,15 - 4-fache der Bratfläche (5a) beträgt.

4. Vorgeformtes Bratgut (1) nach einem der Ansprüche 1 bis 3, **dadurch gekennzeichnet, dass** die Ausnehmung (3) gleichmäßig von der Bratfläche (5a) umschlossen ist.

5. Vorgeformtes Bratgut (1) nach einem der Ansprüche 1 bis 4, **dadurch gekennzeichnet, dass** die Fettmasse (4) die Ausnehmung (3) vollständig ausfüllt.

6. Vorgeformtes Bratgut (1) nach einem der Ansprüche 1 bis 5, **dadurch gekennzeichnet, dass** die Fettmasse (4) scheibenförmig mit einer Dicke (6) von 2 - 5 mm ausgebildet ist.

7. Vorgeformtes Bratgut (1) nach einem der Ansprüche 1 bis 6, **dadurch gekennzeichnet, dass** das Volumen der Fettmasse (4) 1,5 - 20 %, insbesondere 2 - 8 %, des Volumens des Bratguts (1) beträgt.

8. Vorgeformtes Bratgut (1) nach einem der Ansprüche 1 bis 7, **dadurch gekennzeichnet, dass** die Bratmasse (2) Fleisch einer Tiergattung, insbesondere einer Klassifizierungskategorie einer Tiergattung, aufweist, von der auch das Fett der Fettmasse (4) stammt.

9. Bratgut nach einem der Ansprüche 1 bis 8, **dadurch gekennzeichnet, dass** die Fettmasse (4) Gewürze und/oder Aromastoffe aufweist.
